Europäisches Patentamt

(19) European Patent Office

Office européen des brevets

(11) Publication number: **0 250 801**
**A1**

# (12) EUROPEAN PATENT APPLICATION

(21) Application number: **87106908.4**

(22) Date of filing: **13.05.87**

(51) Int. Cl.4: **B01D 46/06** , B01D 46/52

(30) Priority: **19.06.86 US 876139**

(43) Date of publication of application:
**07.01.88 Bulletin 88/01**

(84) Designated Contracting States:
**BE DE ES FR GB IT SE**

(71) Applicant: **ALLIED CORPORATION**
**Columbia Road and Park Avenue P.O. Box**
**2245R (Law Dept.)**
**Morristown New Jersey 07960(US)**

(72) Inventor: **Thornton, Donald Irving**
**Allied Corporation 401 North Bendix Drive**
**PO Box 4001 South Bend, IN 46634-4001(US)**

(74) Representative: **Brullé, Jean et al**
**Service Brevets Bendix 44, rue François 1er**
**F-75008 Paris(FR)**

(54) **Convoluted panel filter cartridge.**

(57) A panel filter cartridge (10) includes a support and sealing structure (12) and filtering panels (16) which are suspended from the support and sealing structure (12). The filtering panels (16) are made from a molded, air-laid media and consist of two pleated side members (18, 20) which are fused together to define a filtering panel (16) consisting of a series of cells (40) which communicate with slots (42) formed in the support and sealing structure. Collapse of each filtering panel (16) is resisted by engagement of the inner knuckles (24) of the pleats (22) with one another, and collapse of the filtering panels (16) upon each other is resisted by engagement of the outer knuckles (26) of the pleats (22) of adjacent filtering panels (16), thereby maintaining air passages (44) between the pleats (22) to permit air to be communicated from the atmosphere into the cells (40) and out of the slots (42) provided in the sealing and support structure (12).

FIG. I

## CONVOLUTED PANEL FILTER CARTRIDGE

This invention relates to a convoluted panel filter cartridge for the air induction system of an internal combustion engine.

Internal combustion engines require a large quantity of air for combustion. To prevent damage to the engine by environmental contaminates, it is necessary to filter the induction air to remove the contaminates. Accordingly, it has become customary to incorporate an air filter in the air induction system to filter the incoming combustion air.

In designing such filters, the automotive engineer is faced with a dilemma. The filter must be of relatively high efficiency; that is it must remove almost all of the particles in the combustion air. However, the filter must not unduly restrict the air induction system. Accordingly, if a very open and porous air filter is used, restriction will be minimized, but the efficiency will be decreased. On the other hand, if a more restricitve filter is used, the efficiency is increased but the restriction of incoming air soon becomes unacceptable when the filter is used since the restriction increases as the filter is used due to the fact that the filter collects the aforementioned dust and dirt particles. It is also necessary that the volume consumed by the filter be minimized, since underhood space is a limiting factor in modern automotive vehicles.

The present invention relates to a panel filter in an array configuration to expose a maximum filtration area to the combustion air flow. In this way, the dust and dirt holding capacity of the filter is maximized, while maintaining a minimal restriction level for as long as possible. The present invention also has the advantage of being at least partially self cleaning, as it is designed such that normal engine vibrations tend to knock away accumulated dirt and dust.

These and other advantages of the present invention will become apparent from the following description, with reference to the accompanying drawings, in which

Figure 1 is a perspective view of an air filter cartridge made pursuant to the teachings of the present invention;

Figure 2 is a an end view of the filter illustrated in Figure 1 which is taken substantially along lines 2-2 of Figure 1;

Figure 3 is an exploded view illustrating the manner in which the side members comprising the filter panel is used in the invention are assembled; and

Figure 4 is a perspective view of filter panels used in the invention before installation on the support and sealing structure.

Referring now to the drawings, a panel filter cartridge assembly generally indicated by the numeral 10 includes a generally rectangular, support and sealing structure generally indicated by the numeral 12. The support and sealing structure 12 includes a perimetrically extending beaded flange 14 that extends around the periphery of the structure 12. The flange 14 is adapted to sealingly engage a conventional air cleaner housing (not shown), which may be split in half and the respective halves thereof clamped on opposite sides of the flange 14 to thereby assure a fluid-tight seal between the air cleaner housing and the flange 14. The structure 12 may be conventionally made by dispensing an appropriate amount of urethene elastomer or plastisol into a conventional mold.

The support and sealing structure 12 supports an array of pleated filtering panels 16. Although three filtering panels 16 are illustrated in the drawing, it should be recognized that the support and sealing structure 12 can be designed to accomodate any necessary number of filtering panels 16 which may be necessary to accomodate the air flow required by the engine.

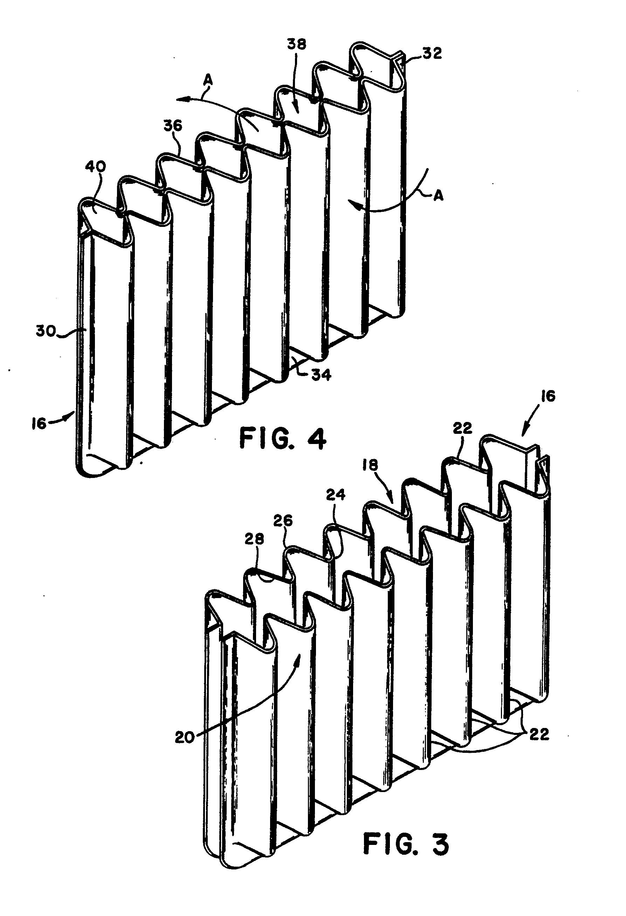

Referring now to Figure 3, each of the filtering panels 16 consist of a pair of pleated side members 18, 20. Each of the members 18, 20 consist of a longitudinally extending array of generally parallel pleats generally indicated by the numeral 22. Each of the pleats 22 include an inner knuckle 24, an outer knuckle 26, and a portion 28 interconnecting the knuckles 24, 26. Each of the panels 16 further include a pair of flanged side edges 30, 32 an end edge 34, and an open edge 36. Each of the edges 30, 32 and 34 are sealed together when the panel 16 is assembled to provide a fluid impermeable seal therebetween. The upper edge 36 is left open and is embedded in the urethene elastomer of which the support and sealing structure 12 comprises when the filter is manufactured. Preferably, the upper edge 36 is embedded in the urethene elastomer while it remains in a semi-molten state in the mold so that a fluid imperme-able seal can be effected between the support of sealing structure 12 and the panels 16. The assembly can be effected manually as is well know to those skilled in the art.

Each of the side members 18, 20 are made from an air-laid, nonwoven batt material. The batt material either includes a thermoplastic fiber or is impregnated with a thermoplastic resin so that it can be molded into the pleated shape illustrated in the figures in a conventional mold. The process for preparing the batt, the materials from which the batt is made, and the manner in which the batt may be molded is fully described in copending U.S. Patent Applications 765,783, filed August 15, 1985; 765,782, filed August 15, 1985, and 772,987, filed September 6, 1985, all of which are owned by the assignee of the present invention and corporated herein by reference. After the side members 18, 20 are made, the edges defined by the flanges at 30, 32, and 34 are fused together by applying heat thereto, to thereby bond the side members 18, 20 into the panel member 16. It will be noted that the panel members 18, 20 are designed such that when the two side members are fused together that the inner knuckles 24 of one side member engage the corresponding inner knuckles 24 of the other side member. Accordingly, engagement of the inner knuckles 24 resist collapse of the pleats as air is drawn from the environment through the pleats into the chamber 38 defined between the side members 18, 20. Engagement of the knuckles 24 divides the filtering panel 16 into a series of cells 40. The support and sealing structure 12 is provided with an array of slotted openings indicated generally at 42, and each of the slotted openings 42 communicates with one of the cells 40.

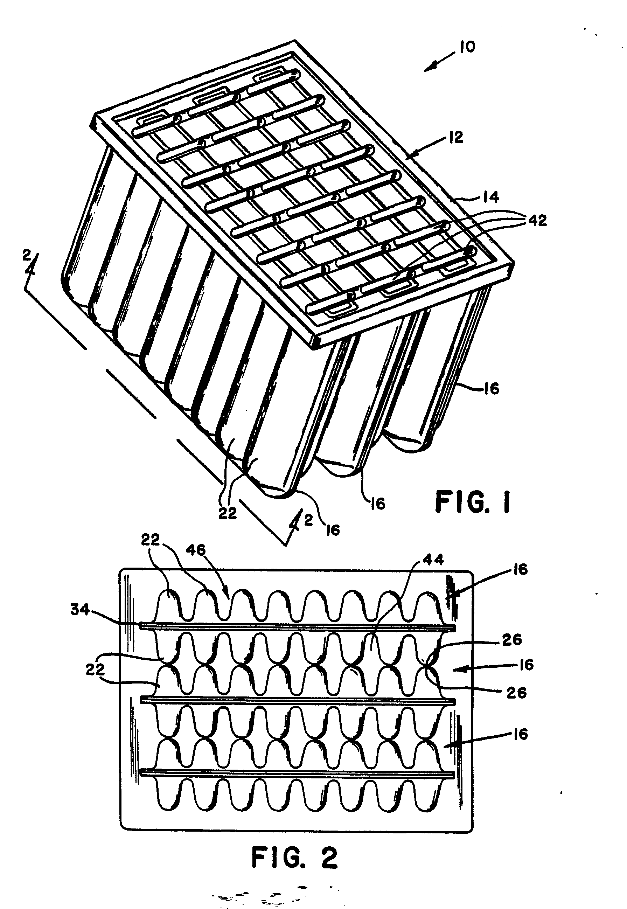

As can best be seen in Figure 2, the filtering panels 16 are assembled on the support and sealing structure 12 in an array such that the outer knuckles 26 of adjacent filtering panels 16 engage one another. As discussed above and in the aforementioned patent applications, the filtering panels 16 are molded such that they are sufficiently stiff to be structurally self-supporting. Engagement of the knuckles 26 of adjacent filtering panels 16 prevents collapse of the filtering panels upon one another, thereby maintaining the flow passages 44 defined between the pleats of adjacent filtering panels 16 open. Accordingly, each individual filtering panel 16 is divided into cells 40 and the pleats 22 thereof are prevented from collapse due to engagement of the inner knuckles 24 of the side members 18, 20, and adjacent filtering panels 16 are prevented from collapsing upon each other by engement of their outer knuckles 26. Accordingly, air can be drawn into the cells 40 not only from the outer edge of the cartridge 10, generally indicated by the numeral 46, but also through the flow passages 44. Since the end of the cartridge 10 opposite the support and sealing structure 12 is open and only the individual panel members 16 are sealed, free air flow is permitted into the passages 44. Accordingly, air flows through the filtering panels 16 from the outside to the inside as indicated by the letter A in Figure 4. Air then flows from the cells 40 through the slots 42, and is then communicated to the engine induction system.

Although the cartridge 10 may be oriented to any direction, it is preferred that the cartridge 10 be oriented vertically, with the filtering panels 16 extending generally downwardly from the support and sealing structure 12. Accordingly, dirt and dust particles, which tend to cake on the outside of the pleats 22, are shaken loose by normal engine vibrations and can therefore drop away from the pleats 22, thereby extending the life of the cartridge.

## Claims

1. Convoluted panel filter cartridge (10) characterized in that said cartridge includes a support and sealing structure (12) and at least one filtering panel (16) suspended from said support and sealing structure (12), said panel (16) comprising of a pair of side members (18, 20) cooperating with one another to define a chamber (38) therebetween, each of said side members (18, 20) including a longitudinal array of substantially parallel pleats (22), and aperature means (42) in said support and sealing structure (12) communicating with said chamber (38).

2. Convoluted panel filter cartridge as claimed in claim 1, further characterized in that the end of the pleats (22) on said side members (18, 20) are defined by inner and outer knuckles (24, 26), each of said pleats (22) including portions (30) further interconnecting the pleats (22), the inner knuckles (24) on each of said side members (18, 20) engaging the corresponding inner knuckles (24) on the other side member to prevent collapse of said pleats (22).

3. Convoluted panel filter cartridge (10) as claimed in claim 2, further characterized in that engagement of said inner knuckles (24) divides said chamber (38) into a series of cells (40) separated by engagement of said inner knuckles (24), said aperature means (42) being a series of openings in said support and sealing structure (12), there being one opening (42) for each of said cells (40).

4. Convoluted panel filter cartridge as claimed in claim 1, further characterized in that more than one of said panels (16) are supported by said support and sealing structure (12), the pleats (22) on each of said panels (16) cooperating with pleats (22) on an adjacent panel (16) to define air flow passages (44) therebetween, the pleats (22) on each of said panels (16) engaging pleats (22) on an adjacent panel (16) to prevent collapse of said air flow passages (44).

5. Convoluted panel filter cartridge as claimed in claim 2, further characterized in that more than one of said panels (16) are supported on said support and sealing structure (12), the pleats (22) on each of said panels (16) cooperating with pleats (22) on an adjacent panel (16) to define air flow passages (44) therebetween, the outer knuckles (26) on each of said panels (16) engaging corresponding outer knuckles (26) of the pleats (22) of an adjacent panel (16) to prevent collapse of said air flow passages (44).

6. Convoluted panel filter cartridge as claimed in claim 5, further characterized in that engagement of said inner knuckles (24) of said side members (18, 20) of each of said panels (16) divides the chamber (38) defined by each of said panels (16) into a matrix of cells (40), said aperature means (42) being a matrix of openings defined in said support and sealing structure (12), there being one of said openings (42) for each of said cells (40), each of said openings (42) communicating with a corresponding one of said cells (40).

7. Convoluted panel filter cartridge as claimed in any of the claims, further characterized in that the pleats (22) of each of said panels (16, 18) extend from said support and sealing structure (12) in a direction permitting environmental contaminants shaken loose from the outer surfaces of said pleats (22) by normal vibration of said filter cartridge (10) to fall away from said pleats (22) by gravity.

8. Convoluted panel filter cartridge as claimed in any of the preceeding claims, characterized in that said filtering panels (16) are manufactured from a material sufficiently stiff that the panels (16) are structurally self-supporting.

FIG. 1

FIG. 2

FIG. 4

FIG. 3

| | DOCUMENTS CONSIDERED TO BE RELEVANT | | EP 87106908.4 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | GB - A - 1 429 253 (AMERICAN AIR FILTER)<br>* Claims; page 1, line 83 - page 2, line 12; fig. 1-3 * | 1-3,6, 8 | B 01 D 46/06<br>B 01 D 46/52 |
| X | US - A - 3 124 441 (RIVERS)<br>* Claims; fig. 4,7,9 * | 1-3 | |
| X | US - A - 3 386 231 (NUTTING)<br>* Claims; fig. * | 1 | |
| P,D, | US - A - 4 636 231 (THORNTON)<br>* Claims * | 1 | |

TECHNICAL FIELDS
SEARCHED (Int. Cl.4)

B 01 D

The present search report has been drawn up for all claims

| Place of search | Date of completion of the search | Examiner |
|---|---|---|
| VIENNA | 06-10-1987 | BECKER |

EPO Form 1503 03 82